# EUROPÄISCHE PATENTSCHRIFT

(11) **EP 3 114 545 B1**
(45) Veröffentlichungstag und Bekanntmachung des Hinweises auf die Patenterteilung: **02.09.2020**
(21) Anmeldenummer: 14709915.4
(22) Anmeldetag: 07.03.2014
(51) Int. Cl.: G06F 3/01

(54) **ANWENDERSCHNITTSTELLE UND VERFAHREN ZUR BEDIENUNG EINER ANWENDERSCHNITTSTELLE MITTELS FREI IM RAUM AUSGEFÜHRTER GESTEN**
USER INTERFACE AND METHOD FOR OPERATING A USER INTERFACE USING GESTURES PERFORMED FREELY IN A SPACE
INTERFACE UTILISATEUR ET PROCÉDÉ DE COMMANDE D'UNE INTERFACE UTILISATEUR PAR DES GESTES EXÉCUTÉS LIBREMENT DANS L'ESPACE

(43) Veröffentlichungstag der Anmeldung: 11.01.2017
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE)
(86) Internationale Anmeldenummer: PCT/EP2014/054451
(87) Internationale Veröffentlichungsnummer: WO 2015/131954

(56) Entgegenhaltungen:
- WO-A1-2012/091185
- US-A1- 2007 177 803
- US-A1- 2010 281 432
- US-A1- 2012 056 989

## Beschreibung

### Stand der Technik

Die vorliegende Erfindung betrifft eine Anwenderschnittstelle sowie ein Verfahren zur Bedienung einer Anwenderschnittstelle mittels frei im Raum ausgeführter Gesten ("3D-Gesten"). Insbesondere betrifft die vorliegende Erfindung Verbesserungen für die Erlernbarkeit vordefinierter Gesten durch einen Anwender.

Die Gestenbedienung im freien Raum erfreut sich immer größerer Beliebtheit. Mittels solcher Gesten können Anwender mit Mensch-Maschine-Schnittstellen kommunizieren, ohne körperlichen Kontakt mit der Eingabeeinrichtung zu haben. Beispielsweise über optische und/oder Infrarot-basierte Systeme wird die Geste erkannt und in Steuerbefehle umgewandelt. Während sich für die Bedienung berührungsempfindlicher Oberflächen von Anwenderschnittstellen rasch intuitiv verständliche Bedienmuster gefunden und durchgesetzt haben, fehlt es den meisten Anwendern für die Bedienung von 3D-Schnittstellen derzeit an entsprechender Erfahrung. Statische Darstellung von Videos oder Bildern in einer Bedienanleitung, welche die möglichen Gesten beschreiben, können die Anwenderakzeptanz nur sehr bedingt verbessern. Dies ist insbesondere dann der Fall, wenn sie konsultiert werden müssen, bevor das System verwendet wird. Dies liegt insbesondere daran, dass die Anwender mittlerweile gewohnt sind, die Bedienung für sie neuer technischer Einrichtungen während der Bedienung (Englisch "learning by doing") zu erlernen.

DE 10 2009 038 895 A1 offenbart ein Verfahren zum Unterstützen eines Bedienens von zumindest einer Einrichtung eines Fahrzeugs, bei welcher eine Bedienabsicht eines Anwenders erkannt und mögliche Bedienschritte auf einer Anzeige angezeigt werden. Als Beispiel wird eine Annäherung an einen berührungsempfindlichen Bildschirm oder einen Dreh-Drück-Steller genannt.

DE 10 2011 121 746 A1 offenbart eine Benutzerschnittstelle eines Fahrzeugs auf Gestenbasis zum Bedienen einer Navigationszustandsgraphik. Hierbei kann der Anwender mit einer in eine Windschutzscheibe projizierten Darstellung per 3D-Geste interagieren. Eine Rückmeldungsgrafik wird verwendet, um die Bewegung einer Hand des Anwenders zum Bedienen der Navigationszustandsgrafik auszurichten. Gattungsgemäße Vorrichtungen und Verfahren sind aus der US 2010/281432 A1, der US 2012/056989 A1 und der US 2007/177803 A1 bekannt. In der US 2010/281432 A1 ist eine Vorrichtung zur Erfassung von Bewegungen offenbart. Die Bewegungen werden erfasst und mittels einer Anzeigevorrichtung modellhaft abgebildet. In der US 2012/056989 A1 ist eine Bilderfassungsvorrichtung beschrieben. Die Vorrichtung weist eine 3D-Kamera zur Erfassung von Bewegungen an einem virtuellen Bildschirm. In der US 2007/177803 A1 ist ein Multi-Touch Gestenwörterbuch offenbart. Dieses Wörterbuch enthält eine Vielzahl von Einträgen mit einer Auswahl an Gesten.

Die vorgenannten im Stand der Technik bekannten Vorrichtungen und Verfahren nutzen die theoretisch mögliche Unterstützung für den Lernerfolg eines Anwenders bei der 3D-Gestenbedienung nicht hinreichend aus. Es ist daher eine Aufgabe der vorliegenden Erfindung, den vorstehend genannten Bedarf zu stillen.

### Offenbarung der Erfindung

Die vorstehend genannte Aufgabe wird erfindungsgemäß durch ein Verfahren mit den Merkmalen gemäß Anspruch 1 und eine Anwenderschnittstelle mit den Merkmalen gemäß Anspruch 7 gelöst. Zusätzlich werden zur Lösung der Aufgabe ein Computerprogrammprodukt, eine Signalfolge und ein Fahrzeug vorgeschlagen. Die erfindungsgemäße Bedienung der Anwenderschnittstelle erfolgt mittels frei im Raum ausgeführter Gesten, welche im Rahmen der vorliegenden Erfindung als 3D-Gesten bezeichnet werden. Die Anwenderschnittstelle ist fest im Fortbewegungsmittel integriert, wobei die Anwenderschnittstelle durch Verwendung der vorliegenden Erfindung anwenderfreundlicher ausgestaltet werden kann. Entsprechend den im Stand der Technik bekannten gattungsgemäßen Vorrichtungen wird in einem ersten Schritt des erfindungsgemäßen Verfahrens eine Hand eines Anwenders erfasst, eine durch die Hand ausgeführte Geste erkannt und die Geste hinsichtlich abgespeicherter, vordefinierter Klassen beurteilt ("klassifiziert"). Mit anderen Worten wird ermittelt, ob die erkannte Geste eine hinreichende Übereinstimmung mit einer für die Bedienung einer jeweiligen Funktion vordefinierten Referenz aufweist. Anschließend wird eine Rückmeldung an den Anwender zum Abstand der 3D-Geste von einer Klassengrenze einer Referenz ausgegeben. Grundsätzlich kann diese Ausgabe lediglich eine Information dahingehend umfassen, ob der Abstand von einer Klassengrenze zur erfolgreichen Erkennung der Klasse hinreichend gering ist oder nicht ("Ja/Nein", binär 0/1). Erfindungsgemäß wird jedoch auch eine quantitative Rückmeldung dahingehend ausgegeben, wie weit die erkannte Geste von einem Idealverlauf (definiert durch die Referenz) entfernt ist. Dies kann beispielsweise durch einen Zahlenwert, durch ein Balkendiagramm, durch eine Farbskala oder durch eine Kontrastskala für die Darstellung eines Symbols o.Ä. erfolgen. Indem dem Anwender nach der Ausführung der 3D-Geste eine unverzügliche Rückmeldung darüber gegeben wird, wie exakt eine

Referenz getroffen worden ist, kann einerseits sehr schnell ein Lernerfolg für die verwendeten Gesten erzielt werden, andererseits Rechenleistung und Energie bei der Erkennung zukünftig zu erkennender Gesten eingespart werden.

Weiter erkennt das erfindungsgemäße Verfahren die Präsenz einer Hand eines Anwenders in einem Bereich zur Erfassung von 3D-Gesten. Üblicherweise ist der Raumbereich zur Erkennung von Gesten begrenzt, so dass ein Hinweis über einen erfolgreichen Eintritt der Hand des Anwenders eine meist willkommene Hilfestellung für einen Anwender darstellt. Im Ansprechen darauf wird ein erster Hinweis zu Klassen aktuell mit Funktionen belegter 3D-Gesten ausgegeben. Mit anderen Worten wird dem Anwender signalisiert, dass und welche 3D-Gesten in der aktuellen Ansicht zur Bedienung verwendet werden können. Insbesondere beim Erstkontakt eines Anwenders mit einer Anwenderschnittstelle kann ein solcher Hinweis die Akzeptanz des Anwenders drastisch erhöhen.

Ein erfindungsgemäßes Bedienszenario beginnt auch mit dem Darstellen eines einer Funktion zugeordneten Bildschirminhaltes, welcher auch als "Menü" oder "Menüpunkt" bezeichnet wird. Anschließend wird ein zweiter Hinweis ausgegeben, durch welchen der Anwender zunächst nur über die grundsätzliche Möglichkeit einer Bedienung der dargestellten Funktion mittels einer 3D-Geste informiert wird. Ein solcher pauschaler Hinweis kann beispielsweise ein Sinnbild für eine Hand umfassen. Alternativ oder zusätzlich kann eine akustische Ausgabe in Form eines Sprachsignals und/oder eines zugeordneten Klangs verwendet werden. Mit anderen Worten erfolgt der zweite Hinweis im Ansprechen auf die Anzeige einer bestimmten Funktion(-sgruppe) und nicht im Ansprechen auf eine Präsenz einer Hand des Anwenders in dem vordefinierten Raumbereich. Auf diese Weise werden Fehlversuche zur Bedienung mittels 3D-Gesten vermieden und der Anwender kann seine Aufmerksamkeit auf andere Aufgaben (z.B. die Fahrzeugführung) richten.

Die Unteransprüche zeigen bevorzugte Weiterbildungen der Erfindung.

Der erste Hinweis zu den "aktuell verfügbaren" Gesten kann beispielsweise ein Sinnbild für eine 3D-Geste umfassen. Beispiele hierfür sind Animationen sich bewegender Hände oder statische Handsymbole, welche durch Pfeildarstellungen ergänzt werden. Alternativ oder zusätzlich kann der zweite Hinweis (zur grundsätzlichen Möglichkeit einer Bedienung mittels 3D-Geste) ein Sinnbild für eine Hand und/oder eine 3D-Geste umfassen. Die 3D-Geste kann beispielsweise eine Hand mit einer Vielzahl von Pfeilen zur Visualisierung möglicher Bewegungsrichtungen oder eine entsprechende Animation des Sinnbildes für die Hand umfassen. Auf diese Weise wird eine rasch und intuitiv erfassbare Information an den Anwender ausgegeben, in welcher Weise er bequem mit der Anwenderschnittstelle interagieren kann.

Eine Möglichkeit zur Rückmeldung des Abstandes der 3D-Geste von der Klassengrenze umfasst eine Modifikation eines Sinnbildes für eine 3D-Geste des ersten Hinweises. Hierbei kann beispielsweise dasjenige Sinnbild für die 3D-Geste optisch hervorgehoben (z.B. animiert, invertiert, umrahmt o.Ä.) werden, wodurch dem Anwender die Nähe seiner Geste zu der durch das Sinnbild repräsentierten Geste veranschaulicht wird. Auf diese Weise wird eine zusätzliche Anzeige und somit Beanspruchung weiterer Oberflächenanteile der Bedienoberfläche vermieden. Für den Fall, dass eine durchgeführte 3D-Geste zwar einer Klasse zugeordnet werden konnte, jedoch ein erheblicher Abstand von der zugeordneten Referenz ermittelt wurde, kann das Sinnbild für die zugeordnete Referenz auch gegenüber den übrigen Sinnbildern oder gegenüber einer Darstellung zu einem vorherigen Zeitpunkt "geschwächt" oder "weniger deutlich" dargestellt werden. Auf diese Weise wird dem Anwender intuitiv ein Verbesserungsbedarf seiner Handführung mitgeteilt.

Bevorzugt wird die Rückmeldung zum Abstand der 3D-Geste durch ein solches Sinnbild visualisiert, welches einer der erkannten 3D-Geste nächstliegenden Klasse zugeordnet ist. Hierbei kann beispielsweise eine farbliche Codierung erfolgen (Grün = geringer Abstand, Gelb = mittlerer Abstand; Rot = kritischer Abstand), so dass der Anwender die Rückmeldung auf eine konkrete Klasse bezieht und seine im Wesentlichen dieser Klasse zugeordnete Geste verbessern kann.

Die Rückmeldung zum Abstand der 3D-Geste von der Klassengrenze wird für eine vordefinierte Zeitdauer ausgegeben und anschließend wieder entfernt. Beispielsweise kann ein Timer gestartet werden, sobald eine Geste erkannt worden ist und nach Ablauf des Timers die vor der Gestenbedienung dargestellte oder durch die Gestenbedienung modifizierte Darstellung angezeigt werden. Auf diese Weise wird die Aufmerksamkeit des Anwenders nur für einen kürzest möglich erforderlichen Zeitraum durch die Rückmeldung beansprucht.

Eine besonders intuitiv verständliche und ebenso einfach wie kostengünstig umsetzbare Möglichkeit zur Rückmeldung des Abstandes der 3D-Geste von der Klassengrenze besteht in einer Modifikation eines α-Wertes oder eines Farbwertes eines Sinnbildes für eine Hand und/oder eines diesbezüglichen Sinnbildes des gesamten ersten Hinweises. Mit anderen Worten werden der Kontrast und/oder die Sättigung des Sinnbildes entsprechend dem Abstand zwischen der tatsächlichen 3D-Geste und der Referenz verändert.

Gesten, welche sich zur Bedienung einer Anwenderschnittstelle als gut erkennbar und gut voneinander unterscheidbar herausgestellt haben, sind die Folgenden:
- eine vertikale Wischgeste nach oben,
- eine vertikale Wischgeste nach unten,
- eine horizontale Wischgeste parallel zu einer Ebene einer Anzeigeeinheit (z.B. ein Bildschirm im Armaturenbrett eines Fortbewegungsmittels) nach links,
- eine horizontale Wischgeste parallel zu einer Ebene einer Anzeigeeinheit nach rechts,
- eine horizontale Wischgeste senkrecht zu einer Ebene einer Anzeigeeinheit nach vorne (aus der Anzeigeebene in Richtung des Anwenders herauskommend,
- eine horizontale Wischgeste senkrecht zu einer Ebene einer Anzeigeeinheit nach hinten (aus Richtung des Anwenders kommend in die Anzeigeebene hinein,
- eine Klick-Geste bzw. eine Tipp-Geste (z.B. mittels eines Schwenks eines Fingers),
- eine Langdrückgeste (Tipp-Halte-Geste für eine vordefinierte Zeitdauer),
- eine Handumdrehung um einen gewissen vordefinierten Winkelbereich insbesondere in Verbindung mit einer vordefinierten Stellung zumindest zweier Finger,
- eine Vergrößerungsgeste bzw. Zoom-in-Geste (z.B. durch Spreizen zweier Finger) und/oder
- eine Verkleinerungsgeste bzw. Zoom-out-Geste (z.B. durch Zusammenführen zweier Finger).

Die vorgenannten Gesten bieten zudem den Vorteil einer großen Vielzahl möglicher unterschiedlicher Aktionen mit dargestellten Bildschirminhalten und assoziierten Funktionen.

Gemäß einem zweiten Aspekt der vorliegenden Erfindung wird eine Anwenderschnittstelle vorgeschlagen, welche einen Sensor zum Erfassen einer frei im Raum ausgeführten Geste (3D-Geste) umfasst. Solche Sensoren werden beispielsweise als optische Sensoren ("Kameras") und/oder als Infrarot-LED-Leiste ausgeführt. Eine Auswerteeinheit ist zum Erkennen und Klassifizieren der erfassten 3D-Geste vorgesehen. Mit anderen Worten wertet die Auswerteeinheit vom Sensor stammende Signale unter Vergleich mit abgespeicherten Referenzen aus. Erfindungsgemäß ist auch eine Ausgabeeinheit vorgesehen, welche eingerichtet ist, eine Rückmeldung an einen Anwender zum Abstand einer erkannten 3D-Geste von einer Referenz auszugeben. Mit anderen Worten ist die Anwenderschnittstelle eingerichtet, ein Verfahren gemäß dem erstgenannten Erfindungsaspekt auszuführen. Es ergeben sich die Merkmale, Merkmalskombinationen und die aus diesen entstehenden Vorteile entsprechend, so dass zur Vermeidung von Wiederholungen auf die obigen Ausführungen verwiesen wird.

Gemäß einem dritten Aspekt der vorliegenden Erfindung wird ein Computerprogrammprodukt (z.B. ein Datenspeicher) vorgeschlagen, auf welchem Instruktionen gespeichert sind, die einen programmierbaren Prozessor (z.B. eines elektronischen Steuergerätes einer Auswerteeinheit) in die Lage versetzen, die Schritte eines Verfahrens gemäß dem erstgenannten Erfindungsaspekt durchzuführen. Das Computerprogrammprodukt kann als CD, DVD, Blue-ray-Disk, Flash-Speicher, Festplatte, RAM/ROM, Cache etc. ausgestaltet sein.

Gemäß einem vierten Aspekt der vorliegenden Erfindung wird eine Signalfolge repräsentierend Instruktionen vorgeschlagen, welche einen programmierbaren Prozessor (z.B. eines elektronischen Steuergerätes einer Auswerteeinheit) in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem fünften Aspekt der vorliegenden Erfindung wird ein Fortbewegungsmittel vorgeschlagen, welches beispielsweise als Fahrzeug (Pkw, Lkw) ausgestaltet sein kann. Dieses Fortbewegungsmittel umfasst eine Anwenderschnittstelle, wie sie als zweitgenannter Erfindungsaspekt oben beschrieben worden ist. Der Sensor kann beispielsweise in einer Mittelkonsole (nach oben ausgerichtet) oder im Dachhimmel des Fortbewegungsmittels (nach unten ausgerichtet) angeordnet sein. Die Auswerteeinheit kann ein elektronisches Steuergerät sein, welches bevorzugt auch für weitere Funktionen verwendet wird. Üblicherweise weisen die Steuergeräte der sogenannten Head Unit die größte Rechenleistungsfähigkeit auf, so dass die erfindungsgemäße Auswertung bevorzugt dort durchgeführt werden kann. Die Ausgabeeinheit ist beispielsweise als zentrales Informationsdisplay in ein Armaturenbrett des Fortbewegungsmittels eingelassen. Es kann eine berührungsempfindliche Oberfläche umfassen, durch welche die erfindungsgemäße Bedienung in bekannter Weise ergänzt werden kann. Die Merkmale, Merkmalskombinationen und die sich aus diesen ergebenden Vorteile entsprechen den in Verbindung mit der Anwenderschnittstelle ausgeführten derart ersichtlich, dass zur Vermeidung von Wiederholungen auch diesbezüglich auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht von Komponenten eines Ausführungsbeispiels eines erfindungsgemäßen Fortbewegungsmittels;
- Figur 2: ein Flussdiagramm veranschaulichend Schritte eines Ausführungsbeispiels eines erfindungsgemäßen Verfahrens;
- Figur 3: eine Zusammenschau möglicher Sinnbilder für Gesten;
- Figur 4: ein Ausführungsbeispiel einer ersten Bildschirmansicht zur Veranschaulichung der grundsätzlichen Möglichkeit einer Gestenbedienung;
- Figur 5: ein Ausführungsbeispiel einer zweiten Bildschirmansicht zur Veranschaulichung aktuell vorgesehener Gesten;
- Figur 6: ein erstes Bedienszenario eines Bildschirminhaltes gemäß einem Ausführungsbeispiel der vorliegenden Erfindung;
- Figur 7: ein zweites Bedienszenario eines Bildschirminhaltes gemäß einem Ausführungsbeispiel der vorliegenden Erfindung;
- Figur 8: ein drittes Bedienszenario eines Bildschirminhaltes gemäß einem Ausführungsbeispiel der vorliegenden Erfindung;
- Figur 9: ein viertes Bedienszenario eines Bildschirminhaltes gemäß einem Ausführungsbeispiel der vorliegenden Erfindung;
- Figur 10: ein fünftes Bedienszenario eines Bildschirminhaltes gemäß einem Ausführungsbeispiel der vorliegenden Erfindung; und
- Figur 11: ein sechstes Bedienszenario eines Bildschirminhaltes gemäß einem Ausführungsbeispiel der vorliegenden Erfindung.

### Ausführungsformen der Erfindung

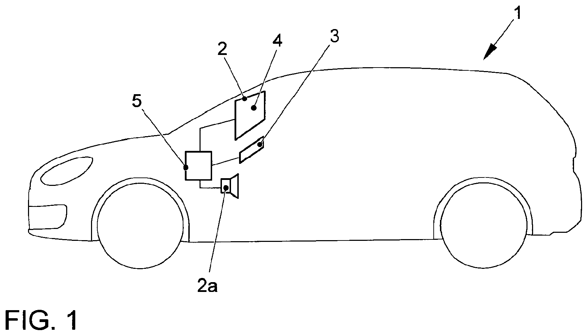

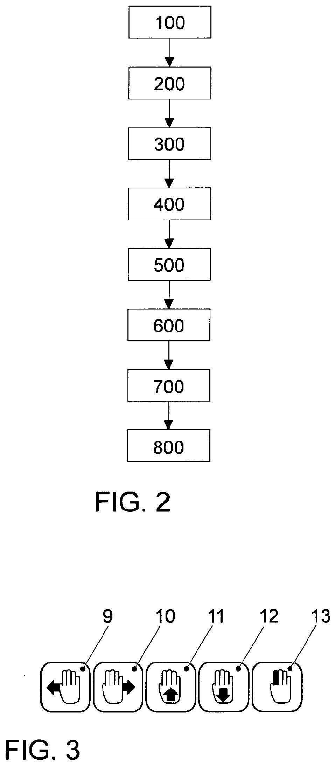

Figur 1 zeigt einen Pkw 1 als Fortbewegungsmittel, in welchem eine Anwenderschnittstelle gemäß einem Ausführungsbeispiel der vorliegenden Erfindung untergebracht ist. Die Anwenderschnittstelle umfasst einen Bildschirm 2 als Teil einer Ausgabeeinheit, welcher mit einem elektronischen Steuergerät 5 als Auswerteeinheit informationstechnisch verbunden ist. Eine Infrarot-LED-Leiste 3 ist als Sensor zum Erfassen einer frei im Raum ausgeführten Geste unterhalb des Bildschirms 2 angeordnet und ebenfalls informationstechnisch mit dem elektronischen Steuergerät 3 verbunden. Zudem ist ein Lautsprecher 2a als Teil der Ausgabeeinheit vorgesehen, um Hinweise zu Betriebszuständen der Anwenderschnittstelle auszugeben. Somit ist der Bildschirm 2 ist eingerichtet, Bildschirminhalte 4 in Form grafischer Darstellungen anzuzeigen, wie sie in Verbindung mit den Figuren 3 bis 11 im Detail beschrieben werden.

Figur 2 zeigt ein Flussdiagramm veranschaulichend Schritte eines Ausführungsbeispiels eines erfindungsgemäßen Verfahrens. Im Schritt 100 wird ein einer Funktion zugeordneter Bildschirminhalt auf dem Bildschirm 2 dargestellt und ein zweiter Hinweis zur grundsätzlichen Möglichkeit der Bedienung der Funktion mittels einer 3D-Geste in Schritt 200 ausgegeben. Dies kann beispielsweise die Anzeige eines Handsymbols auf dem Bildschirm 2 umfassen. Anschließend wird in Schritt 300 die Präsenz einer Hand eines Anwenders in einem Bereich zur Erfassung von 3D-Gesten erkannt und in Schritt 400 ein erster Hinweis zu Klassen aktuell mit Funktionen belegter 3D-Gesten ausgegeben. Diese Klassen können beispielsweise nebeneinander angeordnete Sinnbilder für Gesten eines Anwenders umfassen, wie sie in Verbindung mit Figur 3 beschrieben werden. In Schritt 500 wird anschließend eine 3D-Geste erfasst, die Geste in Schritt 600 erkannt und anschließend in Schritt 700 klassifiziert. Beim Klassifizieren wird die erkannte Geste mit abgespeicherten Referenzen verglichen und einer Referenz zugeordnet, zu welcher sie einen vordefinierten maximalen Abstand einhält. Erfindungsgemäß wird in Schritt 800 eine Rückmeldung an einen Anwender zum Abstand der 3D-Geste von einer Klassengrenze ausgegeben. Die Rückmeldung kann dabei entweder eine binäre Rückmeldung dahingehend darstellen, dass die erkannte 3D-Geste einer vordefinierten Klasse hinreichend nahekommt, oder dass keine der Referenzen eine hinreichende Ähnlichkeit zur erkannten Geste aufweist. Zusätzlich kann eine quantitative Rückmeldung dahingehend ausgegeben werden, wie stark die Ähnlichkeit zwischen der erkannten Geste und der nächstkommenden Referenz ist.

Figur 3 zeigt fünf Beispiele für Sinnbilder für Gesten, welche in im Wesentlichen quadratischen, mit einem Symbol für eine Hand versehenen blauen Feldern mit abgerundeten Ecken bestehen. Zusätzlich zu der Hand ist eine Pfeilspitze eingezeichnet bzw. der Zeigefinger der Hand optisch zur Kenntlichmachung einer Tippgeste hervorgehoben. Es zeigen ein erstes Sinnbild 9 eine horizontale Wischgeste parallel zu einer Ebene einer Anzeigeeinheit nach links, ein Sinnbild 10 eine horizontale Wischgeste parallel zu einer Ebene einer Anzeigeeinheit nach rechts, ein drittes Sinnbild 11 eine vertikale Wischgeste nach oben, ein viertes Sinnbild 12 eine vertikale Wischgeste nach unten und ein fünftes Sinnbild 13 eine Klick-Geste bzw. eine Tipp-Geste in Richtung der Ebene einer Anzeigeeinheit.

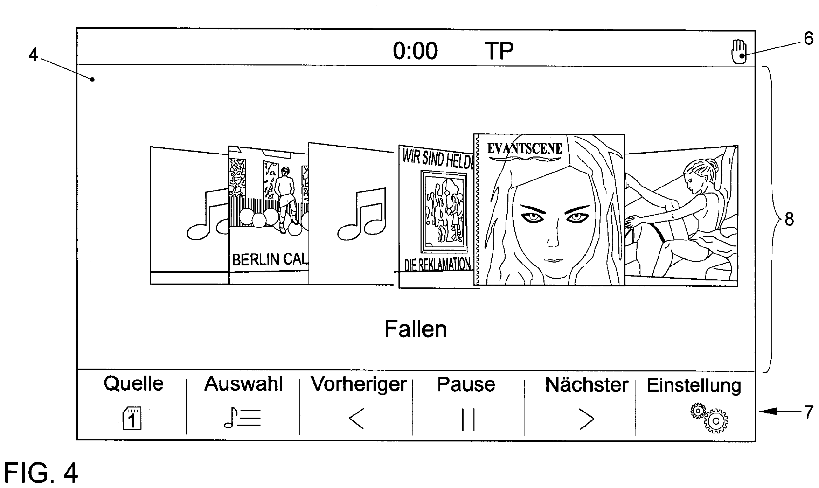

Figur 4 zeigt eine beispielhafte Darstellung eines Bildschirminhaltes 4, welcher in einen Hauptbereich 8 und einen Bedienflächenbereich 7 untergliedert ist. In der oberhalb des Hauptbereiches 8 angeordneten Statusleiste des Bildschirminhaltes 4 ist rechts oben ein Handsymbol 6 als zweiter Hinweis vorgesehen, welcher den Anwender über die grundsätzliche Möglichkeit einer 3D-Gestenbedienung des Bildschirminhaltes 4 informiert.

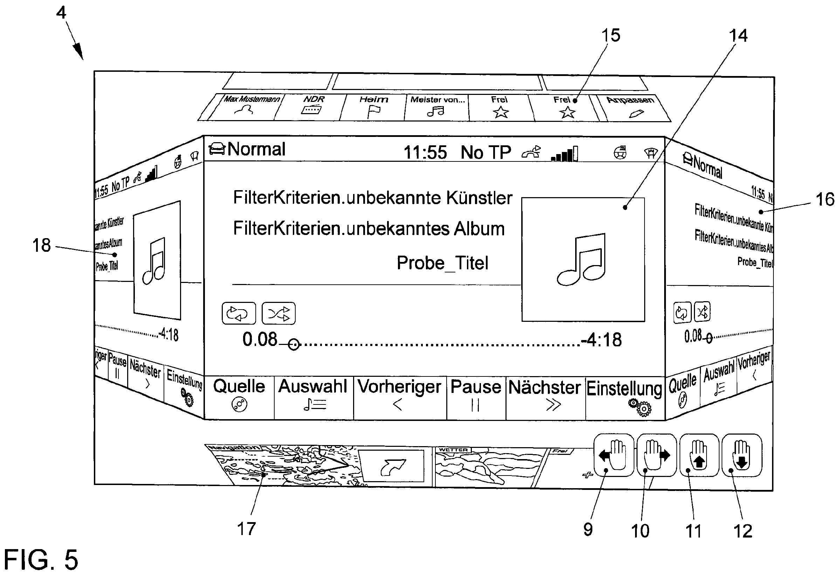

Figur 5 zeigt einen Bildschirminhalt 4 nach der Erkennung einer Hand eines Anwenders in einem vordefinierten Erfassungsbereich zur Gestenerkennung. Vier Sinnbilder 9, 10, 11, 12 für aktuell verfügbare und mit Funktionen hinterlegte Gesten werden rechts unten in der Bildschirmdarstellung 4 dem "Menü" überlagert dargestellt. Mittels der veranschaulichten Gesten kann von einer aktuellen Kachel 14 durch eine vertikale Wischgeste nach unten zu einer darüber liegenden Kachel 15 gewechselt werden. Alternativ kann durch eine horizontale Wischgeste nach links zu einer rechts neben der aktuellen Kachel 14 gelegenen Kachel 16 gewechselt werden. Alternativ kann mittels einer vertikalen Wischgeste nach oben zu einer unter der aktuellen Kachel 14 gelegenen Kachel 17 gewechselt werden. Entsprechendes gilt für eine horizontale Wischgeste nach rechts und eine Kachel 18.

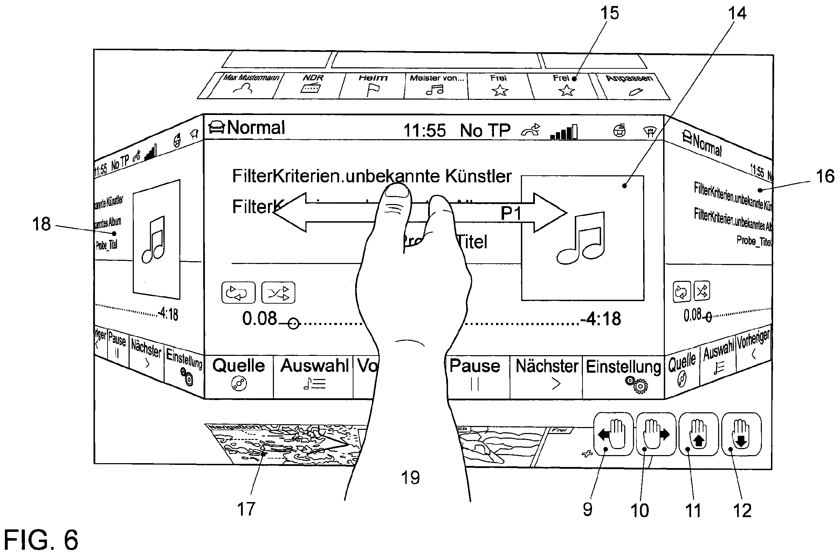

Figur 6 zeigt ein Bedienszenario, in welchem die Hand 19 eines Anwenders eine horizontale Wischgeste entlang dem Doppelpfeil P1 ausführt.

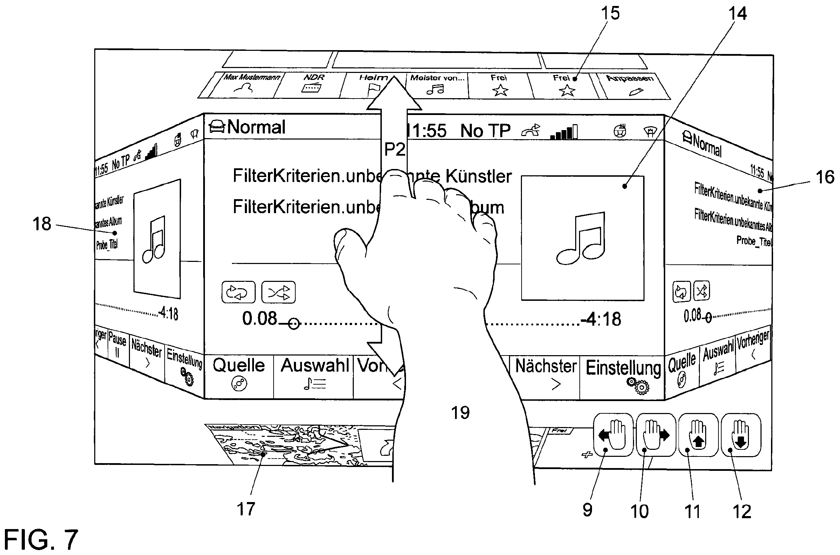

Figur 7 zeigt ein zweites Bedienszenario, in welchem die Hand 19 eines Anwenders eine vertikale Wischgeste entlang des Doppelpfeils P2 ausführt.

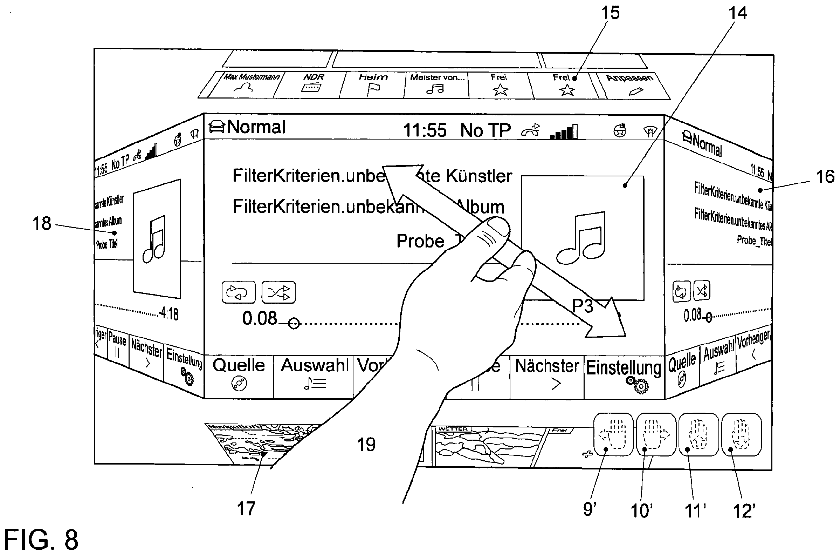

Figur 8 zeigt ein Bedienszenario, in welchem die Hand 19 des Anwenders eine diagonale (aktuelle nicht mit einer Funktion hinterlegte) Wischgeste entlang des Doppelpfeils P3 ausführt. Zur Rückmeldung an den Anwender darüber, dass die erkannte Geste keiner aktuell verfügbaren Funktion/Referenz/Klasse zugeordnet werden kann, werden die Sinnbilder für die verfügbaren Wischgestenklassen 9', 10', 11', 12' hinsichtlich ihres Kontrastes verringert (daher gestrichelt dargestellt). Die Darstellung könnte auch als "ausgegraut" (in der Zeichnung nicht darstellbar) bezeichnet werden. Die vorgenannte Darstellung informiert den Anwender darüber, dass er seine Gestik anzupassen hat, um erfolgreich eine zur Verfügung stehende Funktion anzuwählen.

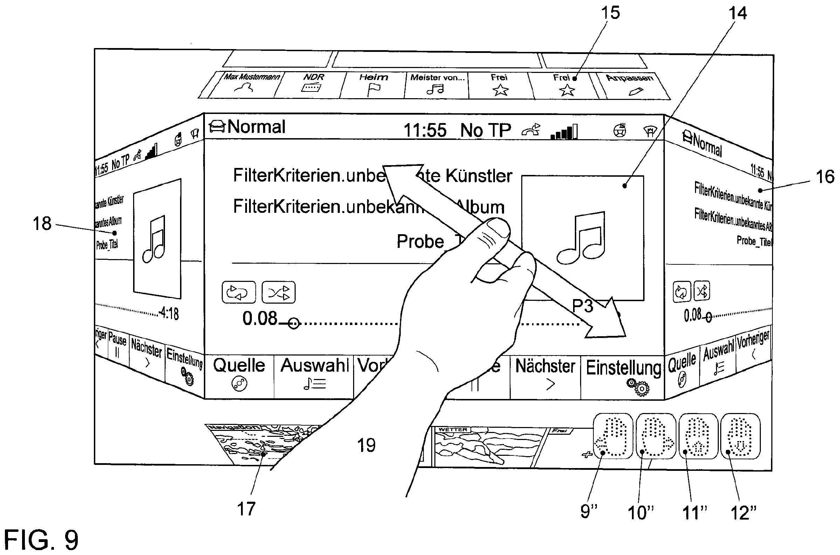

Figur 9 zeigt die in Figur 8 dargestellte Wischgeste entlang des diagonalen Pfeils P3, welche sich hinsichtlich ihres Abstandes zu den verfügbaren Gestenklassen in etwa auf der Hälfte zwischen einer horizontalen Wischgeste nach links und einer vertikalen Wischgeste nach oben bzw. zwischen einer horizontalen Wischgeste nach rechts und einer vertikalen Wischgeste nach unten befindet. Entsprechend sind die Sinnbilder 9", 10", 11", 12" stark in ihrem Kontrast reduziert, um den großen Abstand von definierten Klassengrenzen zu veranschaulichen.

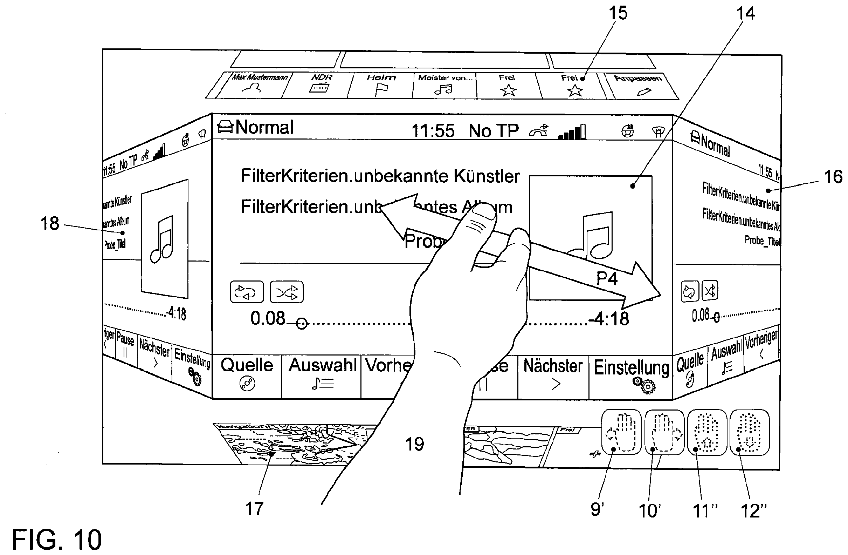

Figur 10 zeigt eine vom Anwender im Ansprechen auf die Rückmeldung gemäß Anspruch 9 angepasste Bediengeste entlang des Pfeils P4. Gegenüber dem diagonalen Pfeil P3 (Fig. 9) ist die Richtung des Pfeils P4 noch immer nicht vollständig waagerecht, hat sich der Waagerechten jedoch erkennbar angenähert. Im Ansprechen darauf werden die Sinnbilder 9' und 10' gegenüber der Darstellung in Fig. 9 in ihrem Kontrast verstärkt, um dem Anwender zu signalisieren, dass die durchgeführte Geste einen geringeren Abstand zur jeweils horizontalen Geste gegenüber einer jeweiligen vertikalen Geste aufweist. Der erhöhte Abstand zur vertikalen Geste wird durch einen weiterhin stark reduzierten Kontrast der Sinnbilder 11", 12" veranschaulicht.

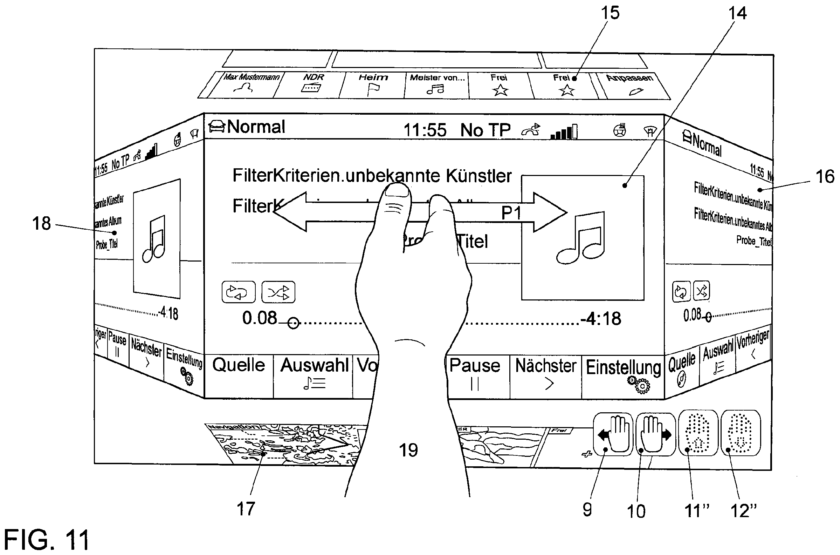

In Figur 11 hat der Anwender eine ideale horizontale Geste entsprechend dem Pfeil P1 ausgeführt und wir über den geringstmöglichen Abstand zur Klasse der horizontalen Gesten durch maximalen Kontrast der Sinnbilder 9, 10 "belohnt". Insofern als die horizontale Wischgeste einen maximalen Abstand von vertikalen Wischgesten aufweist, sind die Sinnbilder 11", 12" weiterhin mit erheblich reduziertem Kontrast dargestellt. Auf diese Weise wird der Anwender intuitiv dazu animiert, eine deutliche Gestik zur Bedienung der erfindungsgemäßen Anwenderschnittstelle zu bemühen, um die Verarbeitungszeit und den mit der Analyse verbundenen Rechenaufwand geringstmöglich zu halten und somit Energie und Prozessorauslastung des betroffenen Steuergerätes zu verringern.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

1 Pkw
2 Bildschirm
2a Lautsprecher
3 Infrarot-LED-Leiste
4 Bildschirminhalt
5 Elektronisches Steuergerät
6 Handsymbol
7 Bedienflächenbereich
8 Hauptbildschirm
9, 9', 9", 10, 10', 10", 11, 11', 11", 12, 12', 12", 13 Sinnbilder für Gesten
14 Aktuelle Kachel
15, 16, 17, 18 Nachbarkacheln
19 Hand des Anwenders
100 bis 800 Verfahrensschritte
P1, P2, P3, P4 Wischgesten

## Patentansprüche

1. Verfahren zur Bedienung einer Anwenderschnittstelle eines Fortbewegungsmittels mittels frei im Raum ausgeführter Gesten (P1, P2, P3, P4, P5), im Folgenden 3D-Gesten genannt, umfassend die Schritte:
- Darstellen (100) eines einer Funktion zugeordneten Bildschirminhaltes (7, 8),
- Ausgeben (200) eines zweiten Hinweises (6) zur grundsätzlichen Möglichkeit der Bedienung der Funktion mittels einer 3D-Geste (P1, P2, P3, P4, P5),
- Erkennen (300) einer Präsenz einer Hand (19) eines Anwenders in einem Bereich zur Erfassung von 3D-Gesten (P1, P2, P3, P4, P5),
- Ausgeben (400) eines ersten Hinweises (9, 10, 11, 12, 13) zu Klassen aktuell mit Funktionen belegter 3D-Gesten (P1, P2, P3, P4, P5),
- Erfassen (500), Erkennen (600) und Klassifizieren (700) einer 3D-Geste (P1, P2, P3, P4, P5), und
- Ausgeben (800) einer Rückmeldung an einen Anwender zum Abstand der 3D-Geste (P1, P2, P3, P4, P5) von einer Klassengrenze, wobei die Rückmeldung quantitativ angibt, wie weit die erkannte Geste (P1, P2, P3, P4, P5) von einem Idealverlauf entfernt ist,
wobei die Klassen aktuell mit Funktionen belegter 3D-Gesten
- eine vertikale Wischgeste nach oben (11), und/oder
- eine vertikale Wischgeste nach unten (12), und/oder
- eine horizontale Wischgeste parallel zu einer Ebene einer Anzeigeeinheit (2) nach links (9), und/oder
- eine horizontale Wischgeste parallel zu einer Ebene einer Anzeigeeinheit (2) nach rechts (10), und/oder
- eine horizontale Wischgeste senkrecht zu einer Ebene einer Anzeigeeinheit (2) nach vorn, und/oder
- eine horizontale Wischgeste senkrecht zu einer Ebene einer Anzeigeeinheit (2) nach hinten, und/oder
- eine Click-Geste bzw. eine Tipp-Geste (13), und/oder
- eine Langdrück-Geste, und/oder
- eine Handdrehung, und/oder
- eine Vergrößerungsgeste bzw. Zoom-in-Geste, und/oder
- eine Verkleinerungsgeste bzw. Zoom-out-Geste, umfassen.

2. Verfahren nach Anspruch 1, wobei
- der erste Hinweis (9, 10, 11, 12, 13) ein Sinnbild für eine 3D-Geste (P1, P2, P3, P4, P5) und/oder
- der zweite Hinweis (6) ein Sinnbild für eine Hand (19) und/oder eine 3D-Geste (P1, P2, P3, P4, P5) umfasst.

3. Verfahren nach Anspruch 1 oder 2, wobei
- der erste Hinweis (9, 10, 11, 12, 13) eine Vielzahl Sinnbilder für jeweilige 3D-Gesten (P1, P2, P3, P4, P5) umfasst.

4. Verfahren nach Anspruch 3, wobei die Rückmeldung zum Abstand der 3D-Geste (P1, P2, P3, P4, P5) von der Klassengrenze eine Modifikation eines Sinnbildes für eine 3D-Geste (P1, P2, P3, P4, P5) des ersten Hinweises (9, 10, 11, 12, 13) umfasst.

5. Verfahren nach Anspruch 3 oder 4, wobei die Rückmeldung zum Abstand der 3D-Geste (P1, P2, P3, P4, P5) von der Klassengrenze eine Hervorhebung eines Sinnbildes für eine 3D-Geste (P1, P2, P3, P4, P5) umfasst, welches einer der erkannten 3D-Geste (P1, P2, P3, P4, P5) nächstliegenden Klasse zugeordnet ist.

6. Verfahren nach einem der vorstehenden Ansprüche, wobei die Rückmeldung zum Abstand der 3D-Geste (P1, P2, P3, P4, P5) von der Klassengrenze eine Alpha- oder Farbwertmodifikation, insbesondere eines Sinnbildes für eine Hand (19) und/oder eine 3D-Geste (P1, P2, P3, P4, P5), des ersten Hinweises (9, 10, 11, 12, 13) umfasst.

7. Anwenderschnittstelle zur festen Integration in ein Fortbewegungsmittel umfassend:
- einen Sensor (3) zum Erfassen (500) einer frei im Raum ausgeführten Geste, im Folgenden 3D-Geste (P1, P2, P3, P4, P5) genannt,
- eine Auswerteeinheit (5) zum Erkennen (600) und Klassifizieren (700) der 3D-Geste (P1, P2, P3, P4, P5), und
- ein Ausgabeeinheit (2, 2a), welche eingerichtet ist, eine Rückmeldung an einen Anwender zum Abstand der 3D-Geste (P1, P2, P3, P4, P5) von einer Klassengrenze auszugeben (800),
**dadurch gekennzeichnet, dass** die Anwenderschnittstelle eingerichtet ist, ein Verfahren gemäß einem der vorstehenden Ansprüche 1 bis 6 durchzuführen.

8. Computerprogrammprodukt umfassend Instruktionen, welche, wenn sie auf einer Auswerteeinheit (5) einer Anwenderschnittstelle nach Anspruch 7 ausgeführt werden, die Auswerteeinheit (5) veranlassen, die Schritte eines Verfahrens nach einem der Ansprüche 1 bis 6 durchzuführen.

9. Signalfolge repräsentierend Instruktionen, welche, wenn sie auf einer Auswerteeinheit (5) einer Anwenderschnittstelle nach Anspruch 7 ausgeführt werden, die Auswerteeinheit (5) veranlassen, die Schritte eines Verfahrens nach einem der Ansprüche 1 bis 6 durchzuführen.

10. Fortbewegungsmittel, insbesondere Fahrzeug, umfassend eine Anwenderschnittstelle gemäß Anspruch 7.

## Claims

1. Method for operating a user interface of a means of transportation by means of gestures (P1, P2, P3, P4, P5) performed freely in a space, hereinafter referred to as 3D gestures, comprising the steps of:
- displaying (100) a screen content (7, 8) associated with a function,
- outputting (200) a second indication (6) regarding the basic possibility of operating the function by means of a 3D gesture (P1, P2, P3, P4, P5),
- detecting (300) a presence of a hand (19) of a user in a region for detecting 3D gestures (P1, P2, P3, P4, P5),
- outputting (400) a first indication (9, 10, 11, 12, 13) regarding classes of 3D gestures currently assigned functions (P1, P2, P3, P4, P5),
- detecting (500), recognizing (600), and classifying (700) a 3D gesture (P1, P2, P3, P4, P5), and
- outputting (800) feedback to a user regarding the difference of the 3D gesture (P1, P2, P3, P4, P5) from a class limit, wherein the feedback quantitatively indicates how far removed the recognized gesture (P1, P2, P3, P4, P5) is from an ideal course,
wherein the classes of 3D gestures currently assigned functions comprise
- a vertical upward swiping gesture (11), and/or
- a vertical downward swiping gesture (12), and/or
- a horizontal leftward swiping gesture (9) parallel to a plane of a display unit (2), and/or
- a horizontal rightward swiping gesture (10) parallel to a plane of a display unit (2), and/or
- a horizontal forward swiping gesture perpendicular to a plane of a display unit (2), and/or
- a horizontal rearward swiping gesture perpendicular to a plane of a display unit (2), and/or
- a clicking gesture or a tapping gesture (13), and/or
- a long-press gesture, and/or
- a hand rotation, and/or
- a magnification gesture or zoom-in gesture, and/or
- a reduction gesture or zoom-out gesture.

2. Method according to Claim 1, wherein
- the first indication (9, 10, 11, 12, 13) comprises a symbol for a 3D gesture (P1, P2, P3, P4, P5) and/or
- the second indication (6) comprises a symbol for a hand (19) and/or a 3D gesture (P1, P2, P3, P4, P5).

3. Method according to Claim 1 or 2, wherein
- the first indication (9, 10, 11, 12, 13) comprises a plurality of symbols for respective 3D gestures (P1, P2, P3, P4, P5).

4. Method according to Claim 3, wherein the feedback regarding the difference of the 3D gesture (P1, P2, P3, P4, P5) from the class limit comprises a modification of a symbol for a 3D gesture (P1, P2, P3, P4, P5) of the first indication (9, 10, 11, 12, 13).

5. Method according to Claim 3 or 4, wherein the feedback regarding the difference of the 3D gesture (P1, P2, P3, P4, P5) from the class limit comprises an emphasis of a symbol for a 3D gesture (P1, P2, P3, P4, P5) which is associated with a class closest to the recognized 3D gesture (P1, P2, P3, P4, P5).

6. Method according to any one of the preceding claims, wherein the feedback regarding the difference of the 3D gesture (P1, P2, P3, P4, P5) from the class limit comprises an alpha or color value modification, in particular of a symbol for a hand (19) and/or a 3D gesture (P1, P2, P3, P4, P5), of the first indication (9, 10, 11, 12, 13).

7. User interface for permanent integration into a means of transportation, comprising:
- a sensor (3) for detecting (500) a gesture freely performed in a space, hereinafter referred to as a 3D gesture (P1, P2, P3, P4, P5),
- an evaluation unit (5) for recognizing (600) and classifying (700) the 3D gesture (P1, P2, P3, P4, P5), and
- an output unit (2, 2a) which is configured to output (800) feedback to a user regarding the difference of the 3D gesture (P1, P2, P3, P4, P5) from a class limit, **characterized in that** the user interface is configured to implement a method according to any one of the preceding Claims 1 to 6.

8. Computer program product comprising instructions which, when executed on an evaluation unit (5) of a user interface according to Claim 7, cause the evaluation unit (5) to implement the steps of a method according to any one of Claims 1 to 6.

9. Signal sequence representing instructions which, when executed on an evaluation unit (5) of a user interface according to Claim 7, cause the evaluation unit (5) to implement the steps of a method according to any one of Claims 1 to 6.

10. Means of transportation, especially, a vehicle, comprising a user interface according to Claim 7.

## Revendications

1. Procédé de commande d'une interface utilisateur d'un moyen de transport par des gestes (P1, P2, P3, P4, P5) exécutés librement dans l'espace, ci-après désignés gestes en 3D, comprenant les étapes de :
- représentation (100) d'un contenu d'écran (7, 8) affecté à une fonction,
- envoi (200) d'une deuxième indication (6) de la possibilité de commander en principe la fonction par un geste en 3D (P1, P2, P3, P4, P5),
- identification (300) d'une présence d'une main (19) d'un utilisateur dans une zone de détection de gestes en 3D (P1, P2, P3, P4, P5),
- envoi (400) d'une première indication (9, 10, 11, 12, 13) de classes de gestes en 3D (P1, P2, P3, P4, P5) actuellement affectés de fonctions,
- détection (500), identification (600) et classification (700) d'un geste en 3D (P1, P2, P3, P4, P5) et
- envoi (800) d'une information en retour à un utilisateur concernant la distance du geste en 3D (P1, P2, P3, P4, P5) par rapport à une limite de classe, l'information en retour indiquant de manière quantitative l'éloignement entre le geste identifié (P1, P2, P3, P4, P5) et un parcours idéal,
les classes de gestes en 3D actuellement affectés de fonctions comprenant
- un geste de balayage vertical vers le haut (11) et/ou
- un geste de balayage vertical vers le bas (12) et/ou
- un geste de balayage horizontal parallèle à un plan d'une unité d'affichage (2) vers la gauche (9) et/ou
- un geste de balayage horizontal parallèle à un plan d'une unité d'affichage (2) vers la droite (10) et/ou
- un geste de balayage horizontal perpendiculaire à un plan d'une unité d'affichage (2) vers l'avant et/ou
- un geste de balayage horizontal perpendiculaire à un plan d'une unité d'affichage (2) vers l'arrière et/ou
- un geste de clic ou un geste de tapotement (13) et/ou
- un geste de pression prolongée et/ou
- une rotation manuelle et/ou
- un geste d'agrandissement ou un geste de zoom vers l'avant et/ou
- un geste de rétrécissement ou un geste de zoom vers l'arrière.

2. Procédé selon la revendication 1, dans lequel
- la première indication (9, 10, 11, 12, 13) comprend un symbole pour un geste en 3D (P1, P2, P3, P4, P5) et/ou
- la deuxième indication (6) comprend un symbole pour une main (19) et/ou un geste en 3D (P1, P2, P3, P4, P5).

3. Procédé selon la revendication 1 ou 2, dans lequel
- la première indication (9, 10, 11, 12, 13) comprend une pluralité de symboles pour des gestes en 3D (P1, P2, P3, P4, P5) respectifs.

4. Procédé selon la revendication 3, dans lequel l'information en retour concernant la distance du geste en 3D (P1, P2, P3, P4, P5) par rapport à la limite de classe comprend une modification d'un symbole pour un geste en 3D (P1, P2, P3, P4, P5) de la première indication (9, 10, 11, 12, 13).

5. Procédé selon la revendication 3 ou 4, dans lequel l'information en retour concernant la distance du geste en 3D (P1, P2, P3, P4, P5) par rapport à la limite de classe comprend une accentuation d'un symbole pour un geste en 3D (P1, P2, P3, P4, P5), qui est affecté à une classe la plus proche du geste en 3D (P1, P2, P3, P4, P5) identifié.

6. Procédé selon l'une quelconque des revendications précédentes, dans lequel l'information en retour concernant la distance du geste en 3D (P1, P2, P3, P4, P5) par rapport à la limite de classe comprend une modification alpha ou de valeur de couleur, en particulier d'un symbole pour une main (19) et/ou un geste en 3D (P1, P2, P3, P4, P5), de la première indication (9, 10, 11, 12, 13).

7. Interface utilisateur destinée à être intégrée à demeure dans un moyen de transport, comprenant :
- un capteur (3) pour la détection (500) d'un geste exécuté librement dans l'espace, ci-après désigné geste en 3D (P1, P2, P3, P4, P5),
- une unité de traitement (5), pour l'identification (600) et la classification (700) du geste en 3D (P1, P2, P3, P4, P5) et
- une unité d'envoi (2, 2a), qui est conçue pour envoyer (800) une information en retour à un utilisateur concernant la distance du geste en 3D (P1, P2, P3, P4, P5) par rapport à une limite de classe,
**caractérisée en ce que** l'interface utilisateur est conçue pour mettre en œuvre un procédé selon l'une quelconque des revendications 1 à 6.

8. Produit de programme informatique comprenant des instructions qui, lorsqu'elles sont exécutées sur une unité de traitement (5) d'une interface utilisateur selon la revendication 7, amènent l'unité de traitement (5) à exécuter les étapes d'un procédé selon l'une quelconque des revendications 1 à 6.

9. Séquence de signaux représentant des instructions qui, lorsqu'elles sont exécutées sur une unité de traitement (5) d'une interface utilisateur selon la revendication 7, amènent l'unité de traitement (5) à exécuter les étapes d'un procédé selon l'une quelconque des revendications 1 à 6.

10. Moyen de transport, en particulier véhicule, comprenant une interface utilisateur selon la revendication 7.
